# EUROPÄISCHE PATENTANMELDUNG

(11) **EP 2 738 479 A2**
(43) Veröffentlichungstag der Anmeldung: **04.06.2014**
(21) Anmeldenummer: 13175195.0
(22) Anmeldetag: 04.07.2013
(51) Int. Cl.: F24J 2/04

(54) **Wärmespeichernder Bodenbelag und Speicherplatte hierfür**

(30) Priorität: 05.07.2012 DE 102012013285
(71) Anmelder: Schindler, German, 56457 Westerburg (DE); Schindler, Bernd, 74182 Obersulm (DE)
(72) Erfinder: Schindler, German, 56457 Westerburg (DE)
(74) Vertreter: Keil & Schaafhausen Patent- und Rechtsanwälte

(57) **Zusammenfassung**

Die vorliegende Erfindung betriff einen wärmespeichernden Bodenbelag (1), insbesondere für Außenflächen wie Parkflächen, Terrassen und Flachdächer, umfassend wenigstens ein in dem Bodenbelag verlegtes Hohlkammerprofil (13) zur Durchführung eines Wärmeträgermediums und eine Schicht aus einem wärmespeichernden Material, welches mit dem Hohlkammerprofil (13) in direktem Wärmeaustausch steht. Die wärmespeichernde Schicht besteht aus wenigstens einer vorgefertigten Speicherplatte (2) mit wenigstens einer nutartigen Ausnehmung (5), in der das Hohlkammerprofil (13), insbesondere ein Rohr, passförmig eingesetzt ist, wobei die Ausnehmung (5) einen U-förmigen Querschnitt mit senkrecht zu einer Oberfläche (3) der Speicherplatte (2) verlaufenden Seitenwänden (15) aufweist und das Hohlkammerprofil (13) klemmend hält. Weiterhin betrifft die Erfindung eine entsprechende Speicherplatte.

## Beschreibung

Die vorliegende Erfindung betrifft einen wärmespeichernden Bodenbelag, insbesondere für Außenflächen wie Parkflächen, Terrassen und Flachdächer, umfassend wenigstens ein in dem Bodenbelag verlegtes Hohlkammerprofil zur Durchführung eines Wärmeträgermediums und eine Schicht aus einem wärmespeichernden Material, welches mit dem Hohlkammerprofil in direktem Wärmeaustausch steht, sowie eine Speicherplatte für den erfindungsgemäßen wärmespeichernden Bodenbelag.

Vor dem Hintergrund knapper werdender Energieressourcen und steigender Energiekosten gewinnen die Reduzierung des Energieverbrauchs und die Erschließung regenerativer Energiequellen zunehmend an Bedeutung. Um diese Ressourcen effizient zu nutzen, werden u.a. sogenannte Flächenabsorber verwendet, die auf dem Prinzip eines Wärmeaustauschers beruhen und mittels derer die Wärme der Sonne bzw. der Umgebung absorbiert und anderweitig genutzt werden kann. Ein großes Verbrauchseinsparpotential liegt in der Nutzung von Dächern und Freiflächen. Zum gegenwärtigen Zeitpunkt stehen in Deutschland insgesamt über 1 Mrd. m² an Flachdächern, z.B. auf Häusern oder Garagen, und mehr als 10 Mio. m² an Park- und Stellflächen zu Verfügung, die unmittelbar von der Sonne bestrahlt werden. Um diese effizient zur Energiegewinnung einzusetzen, können spezielle thermische Bodenbeläge als Solar- bzw. Wärmekollektoren verlegt werden.

Thermische Bodenbeläge sind in der Regel aus mehreren Schichten aufgebaut. In dem Belag sind Hohlkammerprofile, Rohre oder dergleichen verlegt, durch die ein Wärmeträgermedium fließt. Erwärmt sich der Bodenbelag infolge der Sonneneinstrahlung, wird diese Wärmeenergie an die Rohre und das darin fließende Wärmeträgermedium abgegeben und von diesen weiter transportiert. Die abgeführte Wärmeenergie kann z.B. über Wärmetauscher einem Heiz- bzw. Kühlkreislauf eines Gebäudes zugeführt und direkt zur Warmwasserbereitung verwendet werden. Es kann auch in einen Energiespeicher geleitet werden. Zusammen mit dem Energiespeicher bildet der Bodenbelag dann ein energiesparendes Solarthermie-System.

Für eine effiziente Nutzung des Bodenbelags als Wärmekollektor ist neben einer hohen Absorptionsfähigkeit dessen Speicherfähigkeit für die thermische Energie von besonderer Bedeutung, denn die Wärmespeicherfähigkeit dient bei Temperaturschwankungen der Umgebung oder der Intensitätsänderungen der Sonneneinstrahlung als Zwischenspeicher. Dadurch kann auch nach Sonnenuntergang die von der Sonne im Laufe des Tages abgegebene Wärme weiter an das Wärmeträgermedium abgegeben und genutzt werden. Damit das Potenzial solcher Systeme auch für Privathaushalte attraktiv wird, sollte der Bodenbelag eine hohe Wärmeaustauscheffizienz aufweisen und möglichst in Eigenarbeit zu installieren sein.

Ein solarthermischer Bodenbelag zur Nutzung der Sonnenenergie ist beispielsweise in der DE 20 2009 010 924 U1 beschrieben. Hier sind Hohlkammerprofile, in denen ein Wärmeträgermedium fließt, in eine Füllschicht aus einem mechanisch stabilen Einbettmaterial eingebettet, so dass die Hohlkammerprofile in direktem Wärmekontakt mit der Füllschicht stehen. Die Füllschicht ist wiederum von einer Deckschicht aus kaltverlegtem Bitumen-Mineralgemisch bedeckt, die Wärme absorbiert und in die Füllschicht abgibt. Diese erwärmt das Wärmeträgermedium in den Hohlkammerprofilen. Die Füllschicht, die Einbettschicht und ein Oberbelag weisen eine hohe Wärmespeicherkapazität auf und dienen als Langzeitwärmespeicher. Durch den unmittelbaren Kontakt zwischen der Füllschicht und den Hohlkammerprofilen findet ein direkter und verlustarmer Wärmeaustausch statt. Beim Verlegen des Bodenbelags wird zunächst ein Haftvermittler auf einer Abdichtungsschicht aufgebracht. Anschließend werden die Hohlkammerprofile auf einem Befestigungsträger befestigt und mit der Füllschicht bedeckt, die mit einer elastischen Deckschicht aus Bitumen überzogen wird. Der verlegte Bodenbelag weist eine sehr hohe Lebensdauer auf und ist insbesondere für Bodenbeläge auf Parkdecks und Dächern gut geeignet. Um ein solches Schichtsystem zu installieren, empfiehlt sich die Verlegung durch einen Fachbetrieb, der die Rohre ausrichtet und die einzelnen Belagschichten vor Ort anmischt und aufträgt.

Der in der DE 31 10 826 A1 beschriebene Flächenabsorber besteht aus mehreren Absorberplattenelementen, die einander überlappend angeordnet sind und zusammengesetzt einen großflächigen Belag ergeben. Als Grundträger wird eine Asbestzementplatte verwendet. Die Oberfläche der Platte weist einen flachen wellenförmigen Sinusverlauf mit Wellenbergen und breit auslaufenden Wellentälern auf. In den Wellentälern ist jeweils ein Rohr angeordnet, das mittels einer Klebeschicht zwischen Rohr und Platte in der Platte befestigt ist. Das Rohr ist auf seiner Oberseite mit einer bituminösen Anstrichmasse beschichtet, die als Sonnenkollektor dient und in direktem Wärmekontakt mit dem Rohr steht. Durch den unmittelbaren Wärmekontakt entsteht mit der Beschichtung ein Wärmeverbund, durch den die Wärme effizient übertragen werden kann. Problematisch ist jedoch, dass sich der hohe Wärmeeintrag in den Absorber auch auf die Klebemasse zwischen Rohr und Asbestzementplatte auswirkt. Der Kleber kann infolge der thermischen Belastung spröde werden und sich von dem Rohr lösen, wodurch auch eine Wärmespeicherwirkung der Asbestplatte nicht wirksam genutzt werden kann. Zudem ist die Verlegung des Bodenbelags mit erheblichem Aufwand verbunden, da zunächst der Kleber in den Aufnahmen aufgebracht werden muss, bevor die Rohre eingesetzt werden können. Gegebenenfalls muss hierzu ein Fachbetrieb hinzugezogen werden, der auch die wärmeabsorbierende Schicht aufträgt. Zudem erschwert die Verwendung des Klebers ggf. anfallende Reparaturarbeiten, die es notwendig machen, die Rohre auszutauschen. Die Rohre müssen aufwändig vom Kleber entfernt werden.

Es ist daher Aufgabe der vorliegenden Erfindung, einen thermisch effizienten Bodenbelag vorzuschlagen, der sich einfach verlegen lässt und der einfach gewartet werden kann, so dass auch Privathaushalte diesen wirtschaftlich einsetzen können.

Diese Aufgabe wird erfindungsgemäß dadurch gelöst, dass die wärmespeichernde Schicht aus wenigstens einer vorgefertigten Speicherplatte mit wenigstens einer nutartigen Ausnehmung besteht, in welche das Hohlkammerprofil, insbesondere ein Rohr passförmig eingesetzt ist, wobei die Ausnehmung einen U-förmigen Querschnitt mit senkrecht zu einer Oberfläche der Speicherplatte verlaufenden Seitenwänden aufweist und das Hohlkammerprofil klemmend hält.

Durch die erfindungsgemäße Ausbildung des Bodenbelags besitzt dieser eine hohe Wärmeaustauschleistung zwischen der Speicherschicht und dem Hohlkammerprofil, z.B. einem Rohr. Die enge Aufnahme in der Ausnehmung in der Speicherplatte bewirkt vor allem im Bodenbereich eine enge Schmiegung mit größtmöglichem Kontaktwinkel zwischen der Speicherschicht bzw. der Speicherplatte und dem Rohr, so dass die Wärme zwischen Speicherschicht und Rohr effektiv ausgetauscht werden kann. Zudem kann der Bodenbelag einfach verlegt werden, indem die Speicherplatten positioniert und die Hohlkammerprofile in die Ausnehmungen eingesetzt werden. Dabei kann auf zusätzliche Befestigungsmittel zum Fixieren der Rohre, wie einem Kleber, Rohrträgermatten oder Kabelbinder, verzichtet werden, weil die vorgefertigten nutartigen Ausnehmungen der Bodenplatte in Bezug auf die aufgenommen Rohre so ausgebildet sind, dass die Seitenwände der Ausnehmungen eine Klemmwirkung auf das Rohr ausüben und dieses fixieren. Die Ausnehmungen erleichtern somit die Verlegung der Rohre in erheblichem Maße und ermöglichen deren passgenauen Sitz ohne zusätzliche Klemmhilfen. Weil auf Kleber und dergleichen verzichtet werden kann, ist es möglich, den Bodenbelag unabhängig von den Witterungsbedingungen zu verlegen. Die Ausnehmungen haben dabei mindestens eine von der Oberfläche der Speicherplatte zum Grund der Ausnehmung hin verlaufende Tiefe, die wenigstens dem Durchmesser des Hohlkammerprofils entspricht. So werden diese zuverlässig vor mechanischen Beschädigungen geschützt. Wahlweise kann die Speicherplatte mit einer z.B. transparenten Abdeckung versehen werden.

Gerade im Winter bietet der erfindungsgemäße Bodenbelag besondere Vorteile, denn in dieser Jahreszeit sind vor allem Flachdächer durch Schneemassen einsturzgefährdet und müssen von großen Schneeflächen freigehalten werden. Der Bodenbelag kann dann als Wärmeverteiler genutzt werden, indem die Flussrichtung des in den Rohren fließenden Wärmeträgermediums umgedreht wird. Dabei geben die Hohlkammerprofile die Wärme über den Kontaktbereich an die Speicherschicht ab. Der Bodenbelag wird so als Heizsystem verwendet, um im Winter frostfreie Flächen sicherzustellen. In gleicher Weise kann der erfindungsgemäße Bodenbelag dazu beitragen, die Kälteenergie abzuführen und die Kristallisationswärme zu nutzen. Räume, wie z.B. Kühlkammern, können mittels der abgeführten Kälte effizient gekühlt werden.

Ein weiterer Vorteil besteht vor allen im effizienten Abtransport der Wärme aus dem Bodenbelag. Herkömmliche Bitumenschweißbahnen auf Flachdächern haben das Problem, dass die Dachabdeckung nach durchschnittlich 20 bis 25 Jahren anfängt, undicht zu werden. Dies ist vor allem eine Folge der Sonneneinstrahlung, die den schwarzen und hoch wärmeabsorbierenden Dachbelag so stark aufheizt, dass es zu undichten Stellen im Dach kommt, über die Wasser in das Gebäude eindringen kann, das Mauerwerk beschädigt und Schimmelbildung begünstigt. Aus diesem Grund werden jedes Jahr in Deutschland etwa 45 Mio. m² Flachdach zu hohen Kosten kernsaniert. Der erfindungsgemäße Bodenbelag sorgt nun dafür, dass die Wärme aus dem Bodenbelag abtransportiert wird, wodurch sich die Lebensdauer des Bodenbelags beträchtlich erhöht. Der auf einem Untergrund verlegte Bodenbelag bzw. die Speicherplatte besitzt eine dem Untergrund zugewandte Unterseite sowie eine in entgegengesetzter Richtung liegende, also vom Untergrund abgewandte Oberseite. Das wenigstens eine Hohlkammerprofil ist von oben bzw. von der Oberseite in die nach oben offene Ausnehmung der Speicherplatte eingesetzt. Die vorgefertigten Speicherplatten werden zunächst auf dem Untergrund verlegt und positioniert, wobei die Ausnehmung nach oben gerichtet bzw. nach oben hin offen sind, bevor die Hohlkammerprofile, durch die später das Wärmemedium fließt, in die Ausnehmungen eingesetzt werden. Dies hat nicht nur den Vorteil einer einfachen Verlegung, sondern ermöglicht auch den einfachen Austausch einzelner Hohlkammerprofile im Falle einer Leckage. Durch die nach oben hin offenen Ausnehmungen können die Rohre leicht ausgetauscht werden, ohne dass die Speicherplatten vom Untergrund auf dem sie verlegt sind, entfernt werden müssen oder beschädigt werden. Da der Grund der Ausnehmung zum Untergrund hin geschlossen ist, kann im Falle einer Leckage kein Wärmemedium in den Untergrund fließen.

Durch die Ausnehmungen an der Oberseite der Speicherplatte wird insbesondere die fluchtgenaue Verlegung der Speicherplatten ermöglicht. Die Person, die die Platten verlegt, erhält eine visuelle Kontrolle, ob die Ausnehmungen benachbarter Speicherplatten ordnungsgemäß aneinander liegen. Das stellt sich gerade dann als besonders vorteilhaft heraus, wenn benachbarte Speicherplatten unterschiedliche Größen haben oder wenn eine Speicherplatte angelegt wird, die z.B. mäandernde Aussparungen als Rohrführung bzw. Hohlkammerprofilführung aufweist.

Eine besonders bevorzugte Ausführungsform der Erfindung sieht vor, dass die Speicherplatte aus Bitumen bzw. einem Bitumen-Mineralgemisch besteht, dessen Hauptbindemittel Bitumen ist. Vor allem Kaltbitumen kommt als Werkstoff in Betracht. Der Vorteil von Bitumen besteht vor allem darin, dass die Speicherplatte alle Funktionen vereint, die für einen effizienten thermischen Bodenbelag notwendig sind, denn sie besitzt vor allem eine hohe Absorptions- und auch Speicherfähigkeit von Umgebungsenergie. Während andere Systeme das Verlegen einer zusätzlichen Bitumenschicht notwendig machen, um die Wärme effizient aufzunehmen, kommt der Bodenbelag ohne zusätzliche aufwendige Beschichtungen aus. Die Platten können in Serienfertigung, z.B. durch Drehtellerpressung hergestellt werden, was eine einfache Ausformung der Ausnehmungen und einen hohen Durchsatz in der Herstellung ermöglicht.

Je nach Zusammensetzung des Bitumenmaterials kann die Leit- und Speicherfähigkeit der Speicherplatte bzw. des Bodenbelags gezielt eingestellt werden. Auch lässt sich dabei je nach Bedarf das Gewicht der Speicherplatte reduzieren oder diese hinsichtlich der Erfordernisse auf Druckfestigkeit optimieren. Bei der Wahl der Zusammensetzung stehen je nach Anwendungsfall unterschiedliche Kriterien im Vordergrund. Eine Speicherplatte, die eine hohe Speicher- und Absorptionsfähigkeit bei gleichzeitig großer Robustheit aufweisen soll, weist als bevorzugte Mineralbasis zweckmäßigerweise Bitumen, Zement und Kunstharze als Bindemittel auf. Als Zuschlagsstoffe können dabei Basalt, Kies oder Sand verwendet werden. Diese Zusammensetzung besitzt eine hohe Dichte und eine sehr hohe Speicher- und Absorptionsfähigkeit. Sie kann vor allem auf einer Terrasse oder einem Hof verlegt werden, wo die statischen Randbedingen nachrangig sind, aber eine hohe mechanische Festigkeit verlangt wird.

Andere Einsatzfälle verlangen ein geringes Gewicht. Hierbei besteht die bevorzugte Materialbasis aus Bitumen, Zement und Kunstharzen als Bindemittel. Als Leichtzuschlag können Blähton, Schaumlava, Glas oder Schamotte verwendet werden. Bei dieser Zusammensetzung weist die Speicherplatte eine geringe Dichte und ein geringes Flächengewicht auf. Andere Einsatzgebiete wiederum verlangen nach wirksamen Dämmeigenschaften des Belags. In diesem Fall kann die bevorzugte Materialbasis Bitumen, Zement und Kunstharz als Bindemittel umfassen und enthält ferner Schaumglas, Polystyrol und Ähnliches als Dämmzuschlag.

Eine andere Ausführungsform der Erfindung sieht vor, dass die Speicherplatte aus Beton besteht. Die bevorzugte Materialbasis einer solchen Platte ist Zement oder Kunstharz als Bindemittel und Zuschlagsstoffe, die üblicherweise in Betone verwendet werden, wie z.B. Granitsplitt, Kies oder Sand. Der Vorteil liegt insbesondere in den geringen Herstellungskosten und der gegenüber anderen Materialien hohen Druck- und Biegezugfestigkeit. Zudem kann der Bodenbelag nicht nur als Absorber, sondern auch effizient zur Betonkernaktivierung, beispielsweise zum Erwärmen des Fußbodens eines Gebäudes, genutzt werden.

Die Herstellung der Speicherplatte aus Beton kann beispielsweise über das Hermetikverfahren erfolgen, bei dem die Platten auf einer Drehtischpresse mit mehreren Stationen geformt werden. Dieses Verfahren eignet sich für Platten von etwa vier bis zwölf Zentimeter Dicke. Der Beton kann auch im Rahmen eines Nasspressverfahrens dünnflüssig in eine Form eingefüllt werden. Während des Pressvorgangs, bei dem mittels eines Stempels die Platte ihre endgültige Form erhält, wird der größte Teil des Wassers aus der Form gepresst. Idealerweise werden dabei zur Vermeidung von Schrumpfrissen beim Aushärten Betonfasern zugegeben, welche beim Aushärten entstehende Zugspannungen aufnehmen und die Herstellung großer Platten ermöglichen.

Um ein hohes Maß an Formgenauigkeit und Oberflächenqualität der Betonplatte zu erhalten, kann auch ein Gussverfahren zum Einsatz kommen. Ein geeigneter Werkstoff ist dabei Mineralguss, der aus mineralischen Füllstoffen wie Quarzkies, Quarzsand und Gesteinsmehl und einem geringen Anteil Epoxid-Binder besteht. Der Mineralguss wird in einer Mischanlage aufbereitet. Dabei werden Füllstoffe und Bindemittel getrennt gemischt und kurz vor dem Gießen zusammengeführt. Anschließend wird das Mineralgussgemisch kalt oder warm unter ständiger Verdichtungsvibration in eine Gießform aus Holz, Stahl oder Kunststoff gegossen. Nach dem Gießen setzt die Aushärtung durch Polymerisation selbstständig ein. Während des Aushärtens kommt es zu einer exothermen Reaktion, bei der sich der Abguss auf eine Temperatur von maximal 55°C erwärmt. Diese Herstellung ist sehr genau und vermeidet eine notwendige Nachbearbeitung.

Vor dem Hintergrund steigenden Umweltbewusstseins kann ferner vorgesehen sein, dass die Speicherplatte aus recyceltem Material hergestellt wird. Eine Möglichkeit besteht z.B. darin, bereits genutztes Bitumenmaterial zu zerkleinern und als Rohstoff für die Herstellung neuer Speicherplatte zu nutzen. Dies bringt positive Effekte für die Umwelt und eine Energierückgewinnung mit sich.

Auch ist es möglich, statt einer zement- oder bitumengebundenen Mineralmischung, eine Kunstharzbindung mit mineralischen Zuschlägen zu verwenden.

Die einfache Herstellung macht vielseitige Formen der Speicherplatte möglich. So kann diese eine quadratische oder sonstige Rechteckform aufweisen, was eine einfache Verlegung begünstigt.

Durch die erfindungsgemäßen Speicherplatten und die angeformten Rohraufnahmen werden die optimalen Rohrabmessung und Verlegeabstände für den beabsichtigten Einsatzfall bereits im Vorfeld festgelegt, so dass der Bodenbelag von jedem geübten Handwerker oder Dachdecker in Selbstmontage verlegt werden kann, ohne dass es speziell ausgebildeter Fachkräfte bedarf. Zudem ermöglichen die Speicherplatten einen modulartigen Zusammenbau, wodurch im Gegensatz zu großflächigen Verlegungen der Bodenbelag auch nur von einer Person verlegt werden kann. Je nach Einsatzgebiet, z.B. Dach oder Terrasse, werden das Gewicht, die Speicherfähigkeit, die Abmessungen der Ausnehmungen für die Hohlkammerprofile und die Abmessungen der Speicherplatte gezielt eingestellt. Anders als bei herkömmlichen Belagsystemen, die vor Ort angemischt werden müssen, reduziert die vorliegende Erfindung den notwendigen Zeitaufwand für die Installation des Flächenabsorbers erheblich. Die Speicherplatten können so dimensioniert werden, dass eine Verlegung besonders einfach ist, beispielsweise indem sie in Länge und Breite Abmessungen von ca. 50 x 50 cm aufweisen. Trotz der kleinen Dimensionierung können die Speicherplatten bei schlechtem Wetter durch starke Winde, wie einem Sturm, nicht angehoben werden, weil durch die gezielte Einstellung des Gewichts und der Ausbildung der Hohlkammerprofilbefestigung den Windkräften keine Angriffspunkte geliefert werden.

Um Beständigkeit und Absorptionsfähigkeit des Bodenbelags weiter zu verbessern, kann erfindungsgemäß vorgesehen sein, dass die Speicherplatte zumindest auf einer Seite eine witterungsabweisende und vorzugsweise wärmeleitende Deckschicht aufweist. Zweckmäßigerweise handelt es sich dabei um eine schwarze Bitumenbahn. Auch ist eine Deckschicht auf Polymerbitumen, Reaktionsharzen oder dergleichen verwendbar. Alternativ oder zusätzlich kann die Speicherplatte auch mit Photovoltaikmodulen oder -folien abgedeckt werden, um neben der gewonnen Wärme auch Strom zu generieren. Durch die Möglichkeit der Oberflächentemperierung durch vorhandene Prozesswärme kann zudem der Wirkungsgrad der Photovoltaik-Folien erhöht werden, weil diese im Winter schnee- und eisfrei gehalten werden können. Um das Sonnenlicht direkt auf die Speicherschicht und die Rohre treffen zu lassen, kann die Speicherplatte auch von einer Plexiglasschicht bedeckt sein. Möglich ist auch eine Dekor- oder Konterabdeckung. Die Befestigung der Deckschicht erfolgt jeweils vorzugsweise durch flächige Verklebung oder durch vorzugsweise lösbare Steckverbindungen.

Ein großflächiger Bodenbelag kann in einfacher Weise durch nebeneinander verlegt Speicherplatten, die seitlich angeformte bzw. integral mit der jeweiligen Speicherplatte ausgebildete Befestigungsmittel zum Befestigen mit einer anderen Speicherplatte aufweisen, verlegt werden. Dadurch müssen die Speicherplatten nicht wie im Stand der Technik überlappend miteinander verbunden werden, sondern können ohne zusätzliche Befestigungsmittel zu einer planen Fläche in Längs- und Querrichtung miteinander verbunden werden. Ein weiterer Vorteil besteht darin, dass Regenwasser auf der planen Oberfläche ungehindert ablaufen kann. Zudem lässt sich die Sonnenenergie effizienter nutzen, da es auf einer planen Oberfläche zu keiner Schattenbildung kommt, wie es bei einer gewellten Oberfläche der Fall ist.

Insbesondere bei großflächigen Verlegungen hat es sich als vorteilhaft erwiesen, wenn die wärmespeichernde Schicht Armierungsmittel, wie Armierungsstäbe oder -matten zur Erhöhung der Druck- und Zugfestigkeit aufweist, die über die Speicherplatte gelegt und wenigstens abschnittsweise in Aussparungen auf der Speicherplatte befestigt sind. Vorzugsweise erstrecken sich die Armierungsmittel über die gesamte Breite bzw. Länge der Platte, wobei sie mehrere Platten miteinander verbinden können. Idealerweise sind die Armierungsmittel mit jeder Platte verbunden, indem die Armierungsmittel in die Aussparungen in der Speicherplatte eingesetzt sind und die Aussparungen mit Kunstharz, Zementsuspension oder Vergleichbarem vergossen sind. Dies schafft einen kraftschlüssigen Plattenverbund. Es entsteht ein großflächiger Platten- bzw. Belagskörper mit hoher Biege- und Druckfestigkeit. Der Zusammenhalt garantiert, dass keine Spalte zwischen den Platten auftreten, durch die Wasser eindringen könnte.

Eine weitere Ausführungsform der Erfindung sieht vor, dass die Speicherplatte zumindest abschnittsweise eine profilierte Oberfläche aufweist und dass die Oberfläche mit einem Haftvermittler beschichtet ist. Durch die Profilierung entsteht eine vergrößerte Oberfläche, an der der Haftvermittler angreifen kann. Vorzugsweise besteht die Profilierung aus wenigstens einer Rille oder Nut, die sich vorzugsweise parallel zu der wenigstens einen Ausnehmung für die Hohlkammerprofile erstreckt.

In Weiterbildung des Erfindungsgedankens ist vorgesehen, dass die Platte auf der Seite, die den Ausnehmungen gegenüber liegt, profiliert ist. Diese Profilierung sieht vorzugsweise eine Vielzahl von parallel zu den Ausnehmungen verlaufende Aussparungen vor. In den Aussparungen können sich Kleber, eine Selbstklebeschicht aus Bitumen oder eine sonstige Schutzschicht, aber auch Mörtel oder eine Dämmung sammeln und mit der Speicherplatte eine verschiebesichere Verbindung eingehen.

Der Wärmeeintrag in die Hohlkammerprofile lässt sich ferner verbessern, indem die Ausnehmungen mit einem wärmeleitenden Füllmaterial, einem Absorbermedium, insbesondere Bitumen ausgefüllt werden. Dadurch werden Freiräume außerhalb des Schmiegungsbereichs zwischen Hohlkammerprofil und der Ausnehmung eliminiert.

Ferner kann eine Dampf absperrende Schicht auf wenigstens einer Seite der Speicherplatte vorgesehen sein, damit aufsteigende Feuchtigkeit, beispielsweise aus unterhalb des Belags liegenden Räumen, nicht den Bodenbelag anhebt. Alternativ oder zusätzlich kann auch eine Dampf abdichtende und/oder eine Wasser abdichtende Schicht vorgesehen sein.

Die der Erfindung zugrunde liegende Aufgabe wird ferner durch eine Speicherplatte für den erfindungsgemäßen wärmespeichernden Bodenbelag gelöst, welche aus einem wärmespeichernden Material besteht und wenigstens eine nutartige Ausnehmung zum Aufnehmen eines Hohlkammerprofils zur Durchführung eines Wärmeträgermediums aufweist. Zur einfachen Verlegung und einer genauen Führung der Rohre ist vorgesehen, dass die Speicherplatte Mittel zur Befestigung an einer anderen Speicherplatte aufweist, die integral mit der Speicherplatte ausgebildet sind. Weitere Befestigungsmittel oder Montagehilfen zum Erstellen eines Plattenverbundes, wie Befestigungsanker, Verschraubungen, etc., wie sie bei herkömmlichen Systemen verwendet werden, werden so überflüssig. Außerdem können die Speicherplatten oder die Hohlkammerprofile bei Bedarf, zum Beispiel im Falle einer Beschädigung, leicht und gezielt ausgetauscht werden, da sie im Vergleich zu beispielsweise überlappender Verlegung gewellter Platten, sich nicht überlappen und die Hohlkammerprofile nicht verklebt werden müssen.

Als Befestigungsmittel kommen sowohl kraftschlüssige als auch formschlüssige Verbindungen in Frage. Vorzugsweise ist die Speicherplatte zur Bildung einer Steckverbindung mit Nuten oder Ausnehmungen zur Aufnahme eines Zapfens, Steckers oder Ähnlichem versehen. Um eine größtmögliche Variabilität sicherzustellen kann ferner vorgesehen sein, dass an der Platte Stecker, Zapfen oder dergleichen vorgesehen sind, die in die Nuten bzw. Ausnehmungen passen. Die unmittelbare Befestigung der Speicherplatten untereinander ermöglicht einen großflächigen Bodenbelag mit optimaler Ausnutzung der Fläche hinsichtlich der Wärmespeicherwirkung. Gleichzeitig können die Platten fluchtgenau verlegt werden, wobei durch die Befestigungsmittel eine einfache Verlegung auch auf geneigten Flächen leicht bewerkstelligt werden kann. Der feste Zusammenhalt miteinander gekoppelter Speicherplatten ermöglicht darüber hinaus die schwimmende Verlegung auf labilen Untergründen, wie bspw. Schotter, Kies oder Drainage-Schichten, ohne dass die Platten gegeneinander verrutschen.

Um den Bodenbelag auch auf ungleichmäßigen Flächen verlegen zu können, kann die Speicherplatte ein gebogenes oder gerades Flächenprofil aufweisen, wobei die Ausnehmungen für die Hohlkammerprofile dann entsprechend gebogen sind oder geradlinig der Form des Speicherplattenprofils folgen. Eine weitere Ausführungsform sieht vor, dass die Ausnehmungen für die Hohlkammerprofile mäanderförmig oder in Halbbögen durch die Speicherplatte verlaufen, so dass die Rohre in einer vordefinierten Führung verlegt werden können. So lässt sich der Verlegeradius exakt einstellen. Gleichzeitig wird ein Abkanten der Rohre verhindert. Das Wärmeträgermedium kann so ungehindert durch die Rohre fließen.

Die im Zusammenhang mit dem erfindungsgemäßen Bodenbelag beschriebenen Eigenschaften und konstruktiven Merkmale gelten in gleicher Weise auch für die entsprechende Speicherplatte.

Die Erfindung wird nachfolgend anhand von Ausführungsbeispielen und den Zeichnungen näher erläutert. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbezügen.

Es zeigen:
- Fig. 1: in perspektivischer Ansicht einen Schnitt durch einen erfindungsgemäßen Bodenbelag mit einer Speicherplatte,
- Fig. 2: in einer Fig. 1 entsprechenden Ansicht einen Bodenbelag nach einer weiteren Ausführungsform der Erfindung und
- Fig. 3: in einer weiteren perspektivischen Ansicht einen Bodenbelag nach einer dritten Ausführungsform der Erfindung.

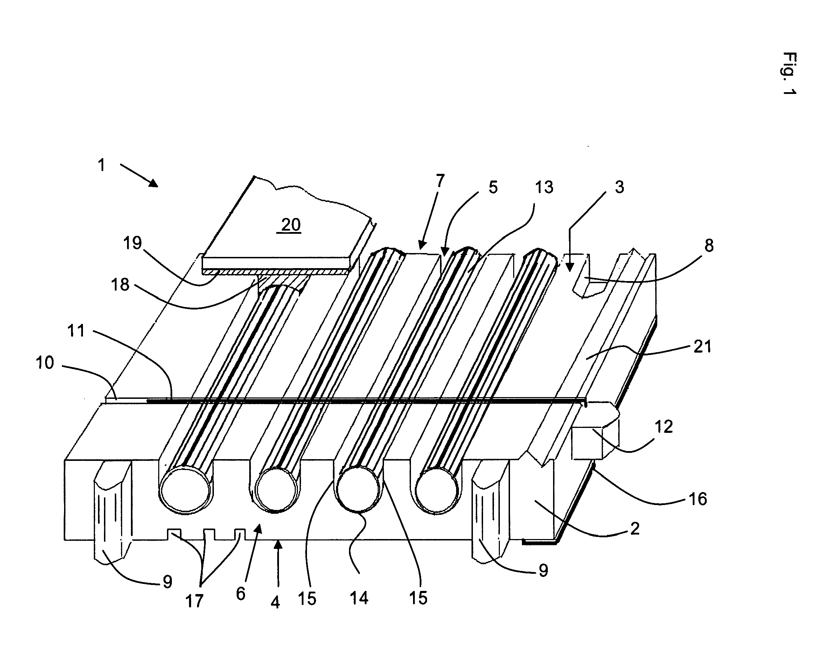

Der in Fig. 1 dargestellte Aufbau des erfindungsgemäßen Bodenbelags 1 umfasst eine Speicherschicht in Form einer vorgeformten Speicherplatte 2, die als Wärmeabsorber dient und in der Lage ist, Umweltwärme aufzunehmen und für längere Zeit zu speichern. Die Speicherplatte 2 besteht aus einem Bitumen-Mineralgemisch und weist eine Oberseite 3 und eine Unterseite 4 auf. Wenn der Bodenbelag 1 verlegt ist, liegt die Unterseite 4 auf einem entsprechenden Untergrund, bspw. einem Parkplatz oder einem Flachdach.

Die Speicherplatte 2 ist im Wesentlichen rechteckigförmig. Auf ihrer Oberseite 4 verlaufen vier gleich geformte Ausnehmungen 5, die parallel zueinander beabstandet sind und sich über die gesamte Länge der Speicherplatte 2 von einem vorderen Ende 6 bis zu einem hinteren Ende 7 erstrecken. Die Ausnehmungen 5 sind angeformt bzw. integral mit der Speicherplatte 2 ausgebildet. Am hinteren Ende 7 ist eine Zapfenaufnahme 8 zur Aufnahme eines an einer benachbarten Speicherplatte 2 ausgebildeten Zapfens 9 vorgesehen, der in der Fig. 1 am vorderen Ende 6 dargestellt ist. Der Zapfen 9 passt hinsichtlich Breite und Länge in die Zapfenaufnahme 8. Die Zapfenaufnahme 8 und der Zapfen 9 dienen der Herstellung einer Nut-Feder-Verbindung mit einer an die Speicherplatte 2 angeschlossenen weiteren Speicherplatte. Auf diese Weise können mehrere Speicherplatten 2 modulartig zusammengesetzt werden. Dabei sind die Ausnehmungen 5 in den Speicherplatten so ausgebildet, dass Ausnehmungen 8 benachbarter Speicherplatten miteinander fluchten, wenn zwei Speicherplatten miteinander verbunden sind.

Die Speicherplatte 2 weist auf ihrer Oberseite 3 quer zu der Ausnehmung 5 eine Aussparung 10 auf, in die ein Fixierstab 11 eingesetzt ist, welcher damit quer über die Ausnehmungen 5 verläuft. Unterhalb des Fixierstabes 11 ist auf der rechten Seite in den Zeichnungen ein seitlicher Zapfen 12 angeordnet, über den die Speicherplatte 2 an eine weitere (nicht dargestellte) Speicherplatte gekoppelt werden kann. Eine passende Aufnahme für den Zapfen ist auf der linken Seitenfläche der Speicherplatte 2 vorgesehen. Die Verbindung über die seitlichen Zapfen 12 verhindert eine laterale und vertikale Relativverschiebung zwei aneinander angeschlossener Speicherplatten, so dass sich stets ein ebener großflächiger Bodenbelag ergibt.

In den Ausnehmungen 5 sind jeweils Hohlkammerprofile in Form von Rohren 13 eingebracht. Die Rohre 13 besitzen einen kreisrunden Querschnitt, wobei der Durchmesser der Rohre 13 auf die Größe der Ausnehmungen 5 abgestimmt ist. Die Ausnehmungen 5 besitzen einen kreisrunden Grund 14, von dem sich senkrecht nach oben verlaufende Seitenwände 15 erstrecken. Der Grund 14 weist einen dem Durchmesser des Rohrs 13 entsprechenden Radius auf, so dass sich zwischen der Außenseite des Rohrs 13 und dem Grund 14 der Speicherplatte 2 eine enge Schmiegung mit großer Kontaktfläche ergibt. Der Abstand der Innenwände 15 einer Ausnehmung entspricht im Wesentlichen dem Durchmesser der Rohre 13, ist aber etwas kleiner, so dass die Innenwände 15 aufgrund der Elastizität der aus Bitumen hergestellten Speicherplatte 2 einen seitlichen Druck auf das Rohr 13 ausüben und fixieren dieses über eine große Kontaktfläche. Über den unmittelbaren Kontakt zwischen Innenwand 15 und dem Grund 14 mit dem Rohr 13 findet ein direkter und effizienter Wärmeaustausch zwischen den Rohren 13 und der Speicherschicht 2 statt. Die Rohre 13 werden in die Ausnehmungen 5 eingesetzt, indem sie von oben mit leichtem Druck in die Ausnehmungen 5 gedrückt werden.

Auf der Unterseite 4 der Speicherplatte 2 ist eine Selbstklebeschicht 16 aus Bitumen aufgebracht. Mittels der Bitumenschicht 16 kann der Bodenbelag vor allem auf alten, noch intakten Abdichtungsbahnen schnell und einfach verlegt werden. Die Unterseite 4 der Speicherplatte 2 besitzt eine untere Profilierung 17 in Form von Aussparungen, die vom vorderen Ende 6 zum hinteren Ende 7 verlaufen. In der Profilierung 17 kann sich das an der Unterseite 4 befindliche Material sammeln. Es entsteht ein Haftverbund zum Untergrund, der ein Verschieben des Bodenbelags verhindert.

Auf der Oberseite der Speicherplatte 2 sind die Ausnehmungen 5 mit einem Verfüllmaterial 18 gefüllt. Das Verfüllmaterial, hier ein Kaltbitumen, umgibt die Rohre 13 und füllt die verbleibenden Freiräume zwischen den Rohren 13 und den Ausnehmungen 5 aus. Über der Oberseite 3 bzw. dem Verfüllmaterial 18 ist ein Haftvermittler 19 aufgebracht, auf dem eine Plattenabdeckung 20 angeordnet ist. Diese leitet die Wärme über den wärmeleitenden Haftvermittler 19 in die Rohre 13 und die Speicherplatte 2. Die Oberseite 3 der Speicherplatte 2 besitzt eine Profilierung 21, welche die Kontaktfläche für den Haftvermittler vergrößert und eine feste Verbindung begünstigt.

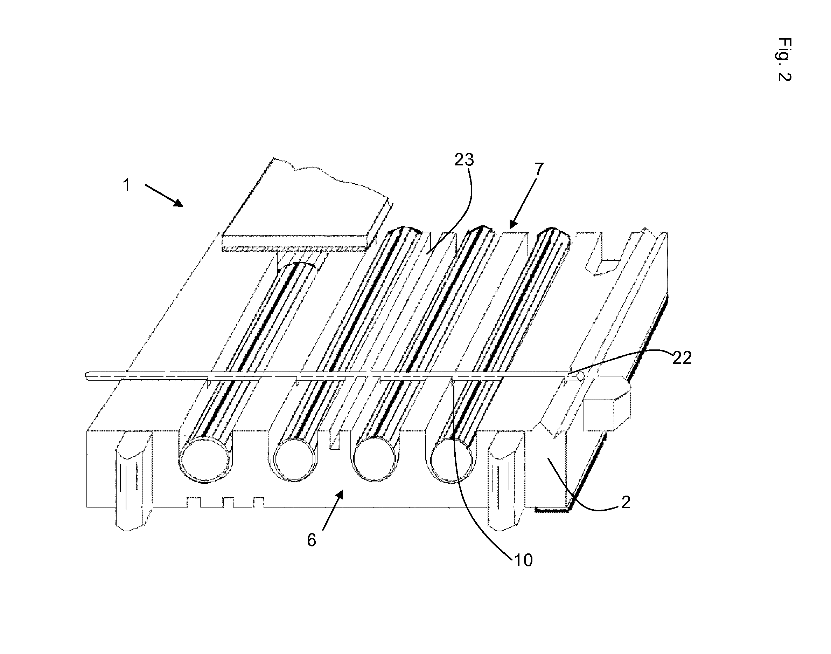

Der in der Fig. 2 dargestellte Bodenbelag 1 entspricht im Wesentlichen dem in Fig. 1 dargestellten Belag, so dass gleiche Bauteile in den Zeichnungen mit den gleichen Bezugsziffern versehen sind. Der Bodenbelag 1 weist in der Fig. 2 einen dicken und sehr festen Armierungsstab 22 auf, welcher in entsprechende Aussparungen 10 auf der Speicherplatte 2 eingesetzt ist und über den mehrere nebeneinander angeordnete Speicherplatten 2 in Querrichtung fest miteinander verbunden werden. Die Aussparungen 10 sind mit Kunstharzen, einer Zementsuspension oder Ähnlichem vergossen. Die Speicherplatte 2 in Fig. 2 verfügt ferner über eine zweite Aussparung 23, die sich vom vorderen Ende 6 zum hinteren Ende 7 der Speicherplatte 2 auf der Oberseite 3 nutartig erstreckt. Die Aussparung 23 dient wie die Aussparung 10 der Aufnahme eines Armierungsmittels, um mehrere aneinander angereihte Speicherplatten 2 in Längsrichtung zu fixieren.

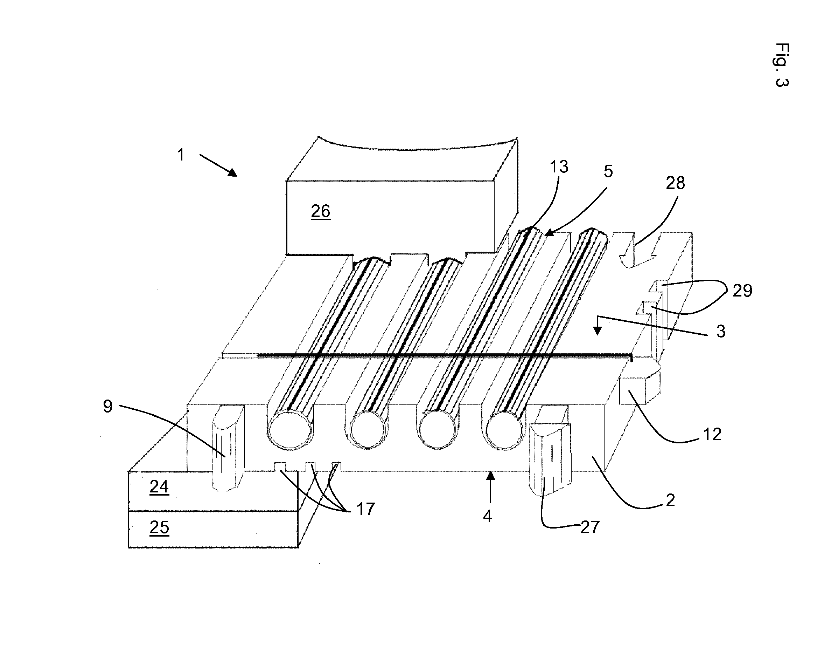

In der Fig. 3 ist ein Bodenbelag 1 dargestellt, bei dem unterhalb der Speicherplatte 2 eine Dämmung 24 vorgesehen ist, die einen Wärmeverlust in den Untergrund verhindert. Die Dämmung 24 liegt auf einer Schotterschicht 25 und füllt zu ihrer Oberseite die untere Profilierung 17 in der Speicherplatte 2 aus, wodurch Schubbewegungen zwischen Speicherplatte 2 und Dämmung 24 in Querrichtung verhindert werden. Die Speicherplatte 2 ist auf ihrer Oberseite mit einer Schicht Beton verschlossen.

Die Fig. 3 zeigt auf der rechten Seite eine Modifikation der Zapfenverbindung. Der Zapfen 27 ist anders als der Zapfen 9 pfeilförmig ausgebildet, wobei eine passende Zapfenaufnahme 28 durch eine entsprechend geformte Ausnehmung gebildet wird. So können mehrere Speicherplatten durch Formschluss aneinander gekoppelt werden. Ferner weist die Speicherplatte 2 an ihren Seiten neben dem seitlichen Zapfen 12 nutartige vertikale Aussparungen 29 auf, die die laterale Fixierung zwischen zwei Platten verstärkt. Auf der gegenüberliegenden Seite weisen die Speicherplatte 2 entsprechend geformte Zapfen auf.

### Bezugszeichenliste:

| | | | |
|---|---|---|---|
| 1 | Bodenbelag | 27 | pfeilförmiger Zapfen |
| 2 | Speicherplatten | 28 | Aufnahme für pfeilförmigen Zapfen |
| 3 | Oberseite | 29 | vertikale Aussparung |
| 4 | Unterseite | | |
| 5 | Ausnehmung | | |
| 6 | vorderes Ende | | |
| 7 | hinteres Ende | | |
| 8 | Zapfenaufnahme | | |
| 9 | Zapfen | | |
| 10 | Aussparung | | |
| 11 | Fixierstab | | |
| 12 | seitlicher Zapfen | | |
| 13 | Hohlkammerprofil (Rohr) | | |
| 14 | Grund | | |
| 15 | Innenwände | | |
| 16 | Selbstklebeschicht | | |
| 17 | untere Profilierung | | |
| 18 | Verfüllmaterial | | |
| 19 | Haftvermittler | | |
| 20 | Plattenabdeckung | | |
| 21 | obere Profilierung | | |
| 22 | Armierungsstab | | |
| 23 | zweite Aussparung | | |
| 24 | Dämmung | | |
| 25 | Schotterschicht | | |
| 26 | Betonschicht | | |

## Patentansprüche

1. Wärmespeichernder Bodenbelag (1), insbesondere für Außenflächen wie Parkflächen, Terrassen und Flachdächer, umfassend wenigstens ein in dem Bodenbelag verlegtes Hohlkammerprofil (13) zur Durchführung eines Wärmeträgermediums und eine Schicht aus einem wärmespeichernden Material, welches mit dem Hohlkammerprofil (13) in direktem Wärmeaustausch steht, **dadurch gekennzeichnet, dass** die wärmespeichernde Schicht aus wenigstens einer vorgefertigten Speicherplatte (2) mit wenigstens einer nutartigen Ausnehmung (5) besteht, in der das Hohlkammerprofil (13), insbesondere ein Rohr, passförmig eingesetzt ist, und dass die Ausnehmung (5) einen U-förmigen Querschnitt mit senkrecht zu einer Oberfläche (3) der Speicherplatte (2) verlaufenden Seitenwänden (15) aufweist und das Hohlkammerprofil (13) klemmend hält.

2. Bodenbelag nach Anspruch 1, **dadurch gekennzeichnet, dass** die Speicherplatte (2) aus Bitumen, vorzugsweise Kaltbitumen bzw. einem Bitumen-Mineralgemisch, besteht.

3. Bodenbelag nach Anspruch 1, **dadurch gekennzeichnet, dass** die Speicherplatte (2) aus Beton oder einer Kunstharzbindung mit mineralischen Zuschlägen besteht.

4. Bodenbelag nach einem der vorhergehenden Ansprüche, **dadurch gekennzeichnet, dass** die Speicherplatte (2) zumindest auf einer Seite mit einer witterungsabweisenden und vorzugsweise wärmeleitenden Deckschicht versehen ist.

5. Bodenbelag nach einem der vorhergehenden Ansprüche, **dadurch gekennzeichnet, dass** die Speicherplatte (2) Armierungsmittel (11, 22) aufweist, die über die Speicherplatte (2) verlegt sind und die wenigstens abschnittsweise in Aussparungen (10, 23) auf der Speicherplatte (2) befestigt sind.

6. Bodenbelag nach einem der vorhergehenden Ansprüche, **dadurch gekennzeichnet, dass** die Speicherplatte (2) zumindest abschnittsweise eine profilierte Oberfläche (3, 4) aufweist.

7. Bodenbelag nach einem der vorhergehenden Ansprüche, **dadurch gekennzeichnet, dass** die Ausnehmungen (5) mit einem wärmeleitenden Füllmaterial (18), insbesondere Bitumen, ausgefüllt sind.

8. Bodenbelag nach einem der vorhergehenden Ansprüche, **dadurch gekennzeichnet, dass** auf wenigstens einer Seite der Speicherplatte (2) eine Dampf absperrende Schicht und/oder eine Dampf abdichtende Schicht vorgesehen ist.

9. Bodenbelag nach einem der vorhergehenden Ansprüche, **dadurch gekennzeichnet, dass** das wenigstens eine Hohlkammerprofil (13) von oben in die Ausnehmung (5) eingesetzt ist.

10. Speicherplatte (2) für einen wärmespeichernden Bodenbelag (1) nach einem der vorhergehenden Ansprüche 1 bis 9, wobei die Speicherplatte (2) aus einem wärmespeichernden Material besteht und wenigstens eine nutartige Ausnehmung (5) zum Aufnehmen eines Hohlkammerprofils (13) zur Durchführung eines Wärmeträgermediums aufweist, **dadurch gekennzeichnet, dass** die Speicherplatte (2) integral ausgebildete Mittel (8, 9; 12; 27, 28) zur Befestigung an einer anderen Speicherplatte aufweist.

11. Speicherplatte nach Anspruch 10, **dadurch gekennzeichnet, dass** die Mittel zur Befestigung aneinander angrenzender Speicherplatten (2) durch Zapfen (9, 12, 27) und entsprechende Zapfenaufnahmen (8, 28) gebildet werden, die an gegenüberliegenden Seitenflächen der Speicherplatten (2) ausgebildet sind.
